# EUROPEAN PATENT SPECIFICATION

(11) **EP 1 842 135 B1**
(45) Date of publication and mention of the grant of the patent: **03.06.2015**
(21) Application number: 06753380.2
(22) Date of filing: 11.04.2006
(51) Int. Cl.: G06F 12/14, G06F 21/79

(54) **GENERIC LOW COST HARDWARE MECHANISM FOR MEMORY PROTECTION**
GENERISCHER KOSTENGÜNSTIGER HARDWARE-MECHANISMUS FÜR SPEICHERSCHUTZ
MECANISME MATERIEL GENERIQUE ECONOMIQUE POUR LA PROTECTION DE MEMOIRE

(30) Priority: 11.04.2005 EP 05290792
(43) Date of publication of application: 10.10.2007
(73) Proprietor: Jaluna SA, F-78180 Montigny-le-Bretonneux (FR)
(72) Inventor: BOULE, Ivan, F-75011 Paris (FR); LEBEE, Pierre, F-60800 Crépy en Valois (FR)
(74) Representative: Maucher Börjes Jenkins Patent- und Rechtsanwälte
(86) International application number: PCT/EP2006/003334
(87) International publication number: WO 2006/108618

(56) References cited:
- US-A- 5 421 006
- US-A- 6 122 706
- US-A1- 2003 140 238
- US-A1- 2004 177 261
- US-B1- 6 304 970

## Description

The present invention relates to a memory protection system and to a method of protecting memory from unauthorised access.

### Background Art

The provision of memory access protection in operating systems requires an underlying hardware mechanism. In conventional systems, such hardware mechanism involves a Memory Management Unit (MMUs) and/or a segmentation unit. The drawback of these mechanisms is that only large memory segments can be protected. This is because memory segments are addressed through a base address and a segment size. The segment size is a power of two value, and the base address must be aligned accordingly.

For example, Intel x86 processors employ a segmentation unit which allows for the addressing of 64 kbyte segments.

Generally, the minimum protectable segment size corresponds to the minimum granule size (power of two) of memory segments that can be addressed by the MMU. For example, if the minimum protectable memory segment size is one kbyte, but a smaller segment of (say) 22 bytes is to be protected, this requires the protection of a full one kilobyte segment (with 1002 bytes "wasted").

Accordingly, in conventional systems, the protection of memory segments is limited by two factors. First, the address length is limited (16 bit in Intel x86 architectures, for example), thereby limiting the maximum size of protectable memory segments. Second, the size of protectable memory segments is fixed in accordance with the addressing scheme employed by the CPU, resulting in potential memory wastage, as explained above. The minimum protectable size is never less than 1 kbyte. Thus, conventional systems are not adapted to adequately deal with the protection of memory segments of varying size.

Another drawback of conventional systems is that they usually require a cache, thereby preventing deterministic behaviour for real time applications.

There is thus a need for an improved system for managing the protection of memory segments. The present invention aims to address this need.

US 2003/0140238 A1 describes a computer system with a secure bootloading function. The secure bootloading function involves a read protect register storing an indication of the location of the size of a block within memory space which is read-protected during bootloading. An activation flag indicates whether the read protection is enabled or disabled. There is also a write protection block which identifies the beginning and ending of a portion of the memory which is to be protected from being overwritten during bootloading. Another activation flag indicates whether the write protection is enabled or disabled.

### Summary of Invention

According to one aspect of the invention, there is provided a method as recited in claim 1.

Preferably, the method uses address storage means comprising first and a second registers allocated to each of the plurality of memory segments, wherein the first register stores the start address of the allocated memory segment, and the second register stores the end address of the allocated memory segment. The method may use comparison means comprising a comparator allocated to each of the plurality of memory segments, each comparator being arranged to receive as input signals the start and end addresses of the allocated memory segment and the addresses of the selected memory portion. Each comparator is arranged to receive an output from the combination means as an additional input signal. Preferably, the comparators are arranged to perform comparison operations in parallel.

The invention can be implemented as a hardware mechanism in a simple manner. It requires no address translation, or a cache of page table entries to speed up virtual to physical memory address translation. Furthermore, it is fully deterministic. It can be easily interfaced with any modem microprocessor architecture. Also, it is simple to manage by Operating Systems.

The present invention enables protection of memory segments of any desired size without constraints. In particular, it is possible to protect segments to within the order of one byte, i.e. without constraints resulting from predetermined minimum segment (granule) sizes and base addresses. This is achieved by storing the start and end address (i.e. the first and last valid address) of each segment. Preferably, though, the minimum size of protectable memory segments corresponds to the maximum number of bytes which can be fetched/stored in a single cycle by the CPU.

In particular, by storing the start and end address of each segment, small segments down to the size of one byte can be protected. For example, a segment of 22 bytes can be protected without wasting physical memory. As a result, no physical memory is wasted. This is very useful in embedded applications having severe constraints on physical memory usage.

For example, the present invention can be used to protect the following types of memory segments:
text segments (storing application code),
private data segments,
text segments of a shared library,
shared data segments,
stacks of the currently executed task of an application.

According to the invention, different types of access to one or more of the memory segments are permitted over time. This is achieved by adapting the control data in accordance with the type of access permitted to any of the segments at any time. Thereyby, a dynamic memory protection system is provided.

Before permitting access to any memory segment, access data indicative of the requested type of access to a selected memory portion is logically combined with the control data, thereby to determine whether the requested access is permitted. This provides for the protection of applications from one another. As applications change over time, so does the type of access permitted to any particular memory segment. This is a dynamic process.

Preferably, by default no memory is accessible by non-trusted applications. Rather, access is controlled through the control data which defines if and what type of access (read/write/execute) to the memory segments is permitted at any time.

### Brief Description of the Drawings

Exemplary embodiments of the invention is described hereinbelow with reference to the drawings, of which:
Figure 1 illustrates a memory protection system in accordance with an embodiment of the invention; and
Figure 2 illustrates the steps of a method for protecting memory from unauthorised access in accordance with an embodiment of the invention.

### Detailed Description of an Embodiment

### Supervisor and User Mode

Memory protection becomes necessary because of the distinction between privileged execution mode (or supervisor mode) and non-privileged execution mode (or user mode). Some operations can only be performed in the supervisor mode, including modifying critical components of the CPU such as the interrupt mask and the execution mode itself, and executing privilege instructions.

The Operating System is considered a trusted entity and executed in privileged mode. In contrast, applications executed in the user mode require the protection of the memory which the application may attempt to access. In case of unauthorised access attempts, the CPU triggers an exception which is processed by the Operating System.

### Memory Protection Mechanism

According to an embodiment of the invention, the address space of a user mode application is split into a set of memory regions or segments. Each memory segment is protected by a hardware mechanism according to the type of its content (code, data).

When the memory protection mechanism is activated (typically in the CPU user mode), each attempted memory access by the CPU is verified by a set of hardware comparators associated with the memory segments. The comparators perform the following operations in parallel:
- checking if the address of the memory to which access is attempted is within the address range of one of the segments, and
- comparing the requested access type with the type of access allowed for the memory segment to be accessed.

The requested access is allowed if at least one of the outputs of comparators indicates that access is authorised. Otherwise, an error is notified to the CPU which in turn notifies the Operating system through a specific exception.

This will now be explained in more detail with reference to the drawings.

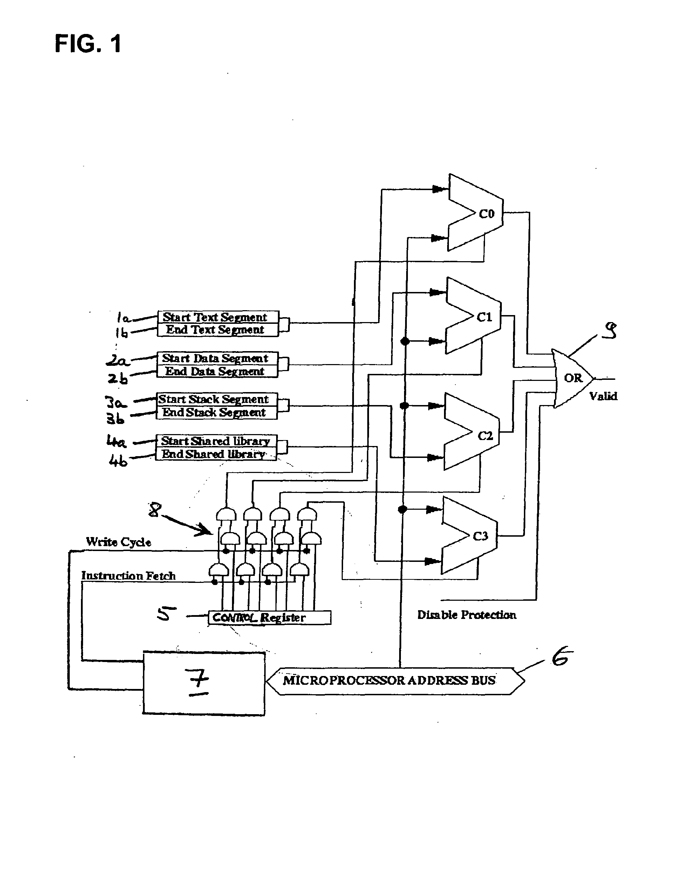

Fig. 1 illustrates a data processing system for the protection of memory segments in accordance with an embodiment of the present invention. In the illustrated embodiment, four memory segments are provided. Each segment is associated with first and second address registers 1a, 1b; 2a, 2b; 3a, 3b; 4a, 4b; respectively. That is, the first memory segment is associated with first and second address registers 1a, 1b, the second memory segment with first and second address registers 2a, 2b, and so on. The first address registers 1a, 2a, 3a and 4a contain the start address (i.e. first valid address) of the respective associated memory segment. The second address registers 1b, 2b, 3b and 4b contain the end address (i.e. last valid address) of the respective associated memory segment.

A control register 5 is provided which contains a bit field of which respective portions are associated with each of the four memory segments. The bit field indicates the type of access allowed to each of the memory segments, for example "execute" access to a memory segment containing code, or "write" access to a memory segment containing data. By default all segments are at least readable.

The address registers 1-4 indicate different exemplary types of applications for which the four memory segments are used. That is, the first memory segment is used as a text segment, the second memory segment is used as a data segment, the third memory segment is used as a stack segment, and the fourth memory segment is used as a shared library. The type of application determines the type of access allowed to each of the segments. This, in turn, is reflected by the bit field in the control register 5.

Each memory segment is associated with a comparator C0, C1, C2, C3, respectively. The comparators C0, C1, C2, C3 perform a logical combination of their respective input signals in parallel. The combination result determines whether or not access to a memory segment may be allowed.

In particular, each comparator C0, C1, C2, C3 receives the start and end addresses of the associated one of the address registers 1,2,3,4, together with an address through a microprocessor address bus 6. The address on the microprocessor address bus 6 indicates the address of a memory portion a microprocessor 7 tries to access. This address is compared in parallel with the addresses stored in the address registers 1-4 in order to determine whether access to one (or more) of the four memory segments is sought.

In addition, each comparator receives the result of a logical combination of the bit field stored in the control register 5 with a "write cycle" and an "instruction fetch" signal from the microprocessor. The "write cycle" signal indicates whether a "write" access is sought by the microprocessor. The "instruction fetch" signal indicates whether an "execute" (instruction fetch) access is sought by the microprocessor. For example, the "write cycle" signal is high when the microprocessor requests a "write access", while the "instruction fetch" signal is low.

The logical combination is performed by gates 8. The logical combination result indicates whether or not access of the type requested is allowed.

For example, the microprocessor my attempt to perform a "write" access to the first memory segment. However, the bit field in the control register 5 that is associated with the first memory segment indicates that only "execute" access to the first memory segment is authorised. Consequently, the logical combination output of the gates 8 which is fed to the comparator C0 is low (for example), and thus the output of the comparator C0 is also low. In this example, the outputs of the other comparators C1, C2 and C3 are also low because no access to the second, third or fourth memory segment is requested, as indicated by the address on the microprocessor address bus 6.

Accordingly, in operation, the comparators C0, C1, C2, C3 can detect in parallel whether or not the current task is authorised to access a selected memory segment, for example in order to execute a current instruction or access a data pointer.

The outputs of the comparators C0, C1, C2 and C3 are combined by an OR gate 9. The OR gate further receives a "disable protection" signal which can override memory access protection, for example in order to execute trusted privilege routines (e.g. instructions from the operating system itself). Finally, the output of the OR gate 9 determines whether or not access to a requested memory segment is allowed.

### Initialisation

The memory protection registers (address registers 1-4, control register 5) can only be accessed in the supervisor mode by the Operating System. Before launching a non-trusted application in the user mode, the Operating System is responsible for initialising the memory protection registers. This includes writing the start and end addresses of the memory segments into the address registers 1-4, and also storing bit fields indicative of the authorised types of access to the memory segments depending on whether they are intended to store data or code, i.e. intended for "write" or "execute" access, respectively.

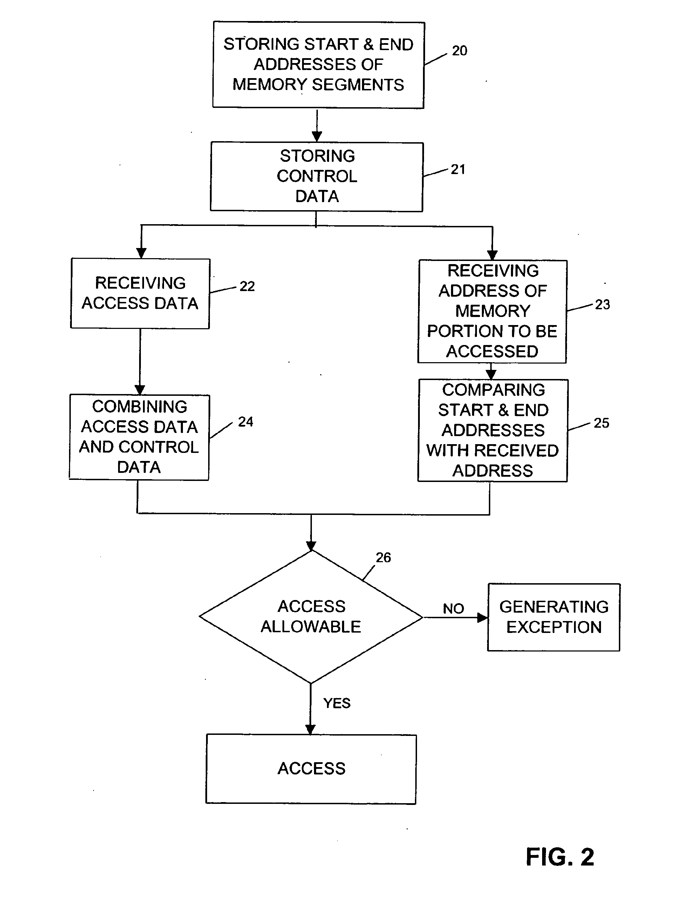

Fig. 2 illustrates the steps of a method for protecting memory from unauthorised access in accordance with an embodiment of the invention. In step 20, the start and end addresses of the memory segments are stored in the address registers 1-4 (Figure 1). In step 21, control data is stored in the control register 5. The control data represents the bit field explained in connection with Figure 1. Steps 20 and 21 are performed as part of the initialisation described above.

In steps 22 and 23, a request to access a selected memory portion is received from the processor 7. The access request is represented by access data indicative of the type of access requested, and by the start and end addresses of the memory portion the processor seeks to access.

In step 24, the access data is logically combined with the stored control data, thereby to determine whether the requested access is of a permitted type. In step 25, the stored start and end addresses of the memory segments are compared with the start and end addresses of the memory portion which the processor seeks to access.

The combination and comparison results determine whether or nor access to the selected memory portion is allowable. If the determination in step 26 is positive, then access is allowed. If it is negative, then an exception is generated and control handed over to the Operating System.

It should be noted that the invention is not limited to the above described exemplary embodiments and it will be evident to a skilled person in the art that various modifications may be made within the scope of protection as determined from the claims.

## Claims

1. A method for protecting memory from unauthorised access, the method comprising:
storing (20) the start and end addresses of each of a plurality of memory segments;
storing (21) control data in a control register (5), the control data being indicative of a type of permitted access to each of the plurality of memory segments;
receiving (22, 23) a request to access a selected memory portion from a processor, wherein the request is represented by addresses of the selected memory portion and access data indicative of the type of access;
comparing (25) the start and end addresses with the addresses of the selected memory portion;
logically combining (24) the access data with the control data;
permitting the access to the selected memory portion depending on the comparison and combination results; and
dynamically adapting the control data in the control register (5) to permit different types of access to one or more of the memory segments over time.

2. The method of claim 1, further comprising receiving a disable signal from the processor, thereby to permit access to the selected memory segment regardless of the comparison and combination results.

3. The method of any of claims 1 or 2, wherein by default no access to any of the memory segments by non-trusted applications is permitted.

4. The method of any preceding claim, wherein the start and end addresses of each of the plurality of memory segments is stored in address storage means comprising first and a second registers allocated to each of the plurality of memory segments, wherein the first register stores the start address of the allocated memory segment, and the second register stores the end address of the allocated memory segment.

5. The method of any preceding claim, wherein the comparison (25) is performed by a comparator allocated to each of the plurality of memory segments, each comparator receiving as input signals the start and end addresses of the allocated memory segment and the addresses of the selected memory portion.

6. The method of claim 5, wherein each comparator receives, as an additional input signal, an output from combination means performing the combination.

7. The method of claim 5 or 6, wherein the comparators perform comparison operations in parallel.

8. The method of claim 5, 6 or 7, wherin the output signals of the comparators are combined by an OR gate (9), wherein the output signal of the OR gate is indicative of whether or not access to the selected memory portion sought by a processor is allowable.

9. The method of any preceding claim, wherein the types of permitted access include "execute" and "write" access.

10. A data processing system adapted to perform the method of any preceding claims.

11. A computer program product comprising code which, when executed by a data processing system, performs the method of any of claims 1 to 9.

## Patentansprüche

1. Verfahren zum Schutz von Speicher vor unbefugtem Zugriff, wobei das Verfahren umfasst:
Speichern (20) der Start- und Endadressen von jedem von mehreren Speichersegmenten;
Speichern (21) von Steuerdaten in einem Steuerregister (5), wobei die Steuerdaten auf eine Art von erlaubtem Zugang zu jedem von den mehreren Speichersegmenten hinweisen;
Empfangen (22, 23) einer Anfrage, um auf einen ausgewählten Speicherabschnitt von einem Prozessor zuzugreifen, wobei die Anfrage durch Adressen des ausgewählten Speicherabschnitts und Zugriffsdaten, die auf die Art des Zugriffs hinweisen, dargestellt ist;
Vergleichen (25) der Start- und Endadressen mit den Adressen des ausgewählten Speicherabschnitts;
logisches Kombinieren (24) der Zugangsdaten mit den Steuerdaten;
Erlauben des Zugriffs auf den ausgewählten Speicherabschnitt abhängig von den Vergleichs- und Kombinationsresultaten; und
dynamisches Anpassen der Steuerdaten im Steuerregister (5), um unterschiedliche Arten des Zugriffes auf ein oder mehrere der Speichersegmente über Zeit zu erlauben.

2. Verfahren nach Anspruch 1, weiter umfassend das Empfangen eines Deaktivierungssignals vom Prozessor, um dadurch unabhängig von den Vergleichs- und Kombinationsresultaten Zugriff auf das ausgewählte Speichersegment zu erlauben.

3. Verfahren nach einem der Ansprüche 1 oder 2, wobei standardmäßig kein Zugriff auf irgendeines der Speichersegmente durch nicht vertrauenswürdige Anwendungen erlaubt ist.

4. Verfahren nach irgendeinem vorhergehenden Anspruch, wobei die Start- und Endadressen von jedem der mehreren Speichersegmente in Adressspeichermitteln gespeichert sein, die ein erstes und ein zweites Register umfassen, die zu jedem von den mehreren Speichersegmenten zugewiesen sind, wobei das erste Register die Anfangsadresse des zugewiesenen Speichersegments und das zweite Register die Endadresse des zugewiesenen Speichersegments speichert.

5. Verfahren nach irgendeinem vorhergehenden Anspruch, wobei der Vergleich (25) durch einen Vergleicher ausgeführt wird, der zu jedem von den mehreren Speichersegmenten zugewiesen ist, wobei jeder Vergleicher als Eingangssignale die Start- und Endadressen des zugewiesenen Speichersegments und die Adressen des ausgewählten Speicherabschnitts empfängt.

6. Verfahren nach Anspruch 5, wobei jeder Vergleicher als ein zusätzliches Eingangssignal einen Ausgang vom Kombinationsmittel empfängt, das die Kombination ausführt.

7. Verfahren nach Anspruch 5 oder 6, wobei die Vergleicher Vergleichsoperationen parallel ausführen.

8. Verfahren nach Anspruch 5, 6 oder 7, wobei die Ausgangssignale der Vergleicher durch ein ODER-Gatter (9) kombiniert werden, und wobei das Ausgangssignal des ODER-Gatters darauf hinweist, ob der Zugriff auf den ausgewählten Speicherabschnitt, der durch einen Prozessor angefragt wird, zulässig ist.

9. Verfahren nach irgendeinem vorhergehenden Anspruch, wobei die Arten des erlaubten Zugriffs "Ausführ"- und "Schreib"-Zugriff einschließen.

10. Datenverarbeitungssystem, das angepasst ist, das Verfahren nach einem der vorstehenden Ansprüche auszuführen.

11. Computerprogrammprodukt, das Code umfasst, der bei Ausführung durch ein Datenverarbeitungssystem das Verfahren nach irgendeinem der Ansprüche 1 bis 9 ausführt.

## Revendications

1. Procédé de protection de mémoire contre tout accès non autorisé, le procédé comprenant :
la mémorisation (20) des adresses de début et de fin de chacun d'une pluralité de segments de mémoire ;
la mémorisation (21) de données de commande dans un registre de commande (5), les données de commande étant indicatives d'un type d'accès autorisé à chacun de la pluralité de segments de mémoire ;
la réception (22, 23) d'une demande d'accès à une portion de mémoire sélectionnée à partir d'un processeur, dans lequel la demande est représentée par des adresses de la portion de mémoire sélectionnée et des données d'accès indicatives du type d'accès ;
la comparaison (25) des adresses de début et de fin aux adresses de la portion de mémoire sélectionnée ;
la combinaison logique (24) des données d'accès avec les données de commande ;
l'autorisation de l'accès à la portion de mémoire sélectionnée en fonction des résultats de la comparaison et de la combinaison ; et
l'adaptation dynamique des données de commande dans le registre de commande (5) pour autoriser différents types d'accès à un ou plusieurs des segments de mémoire au fil du temps.

2. Procédé selon la revendication 1, comprenant en outre la réception d'un signal de désactivation provenant du processeur, pour autoriser de ce fait l'accès au segment de mémoire sélectionné indépendamment des résultats de la comparaison et de la combinaison.

3. Procédé selon la revendication 1 ou 2, dans lequel, par défaut, il n'est autorisé aucun accès à l'un quelconque des segments de mémoire par des applications qui ne sont pas dignes de confiance.

4. Procédé selon l'une quelconque des revendications précédentes, dans lequel les adresses de début et de fin de chacun de la pluralité de segments de mémoire sont mémorisées dans des moyens de mémorisation d'adresse comprenant des premier et deuxième registres attribués à chacun de la pluralité de segments de mémoire, dans lequel le premier registre mémorise l'adresse de début du segment de mémoire attribué et le deuxième registre mémorise l'adresse de fin du segment de mémoire attribué.

5. Procédé selon l'une quelconque des revendications précédentes, dans lequel la comparaison (25) est effectuée par un comparateur attribué à chacun de la pluralité de segments de mémoire, chaque comparateur recevant, en tant que signaux d'entrée, les adresses de début et de fin du segment de mémoire attribué et les adresses de la portion de mémoire sélectionnée.

6. Procédé selon la revendication 5, dans lequel chaque comparateur reçoit, en tant que signal d'entrée supplémentaire, une sortie des moyens de combinaison effectuant la combinaison.

7. Procédé selon la revendication 5 ou 6, dans lequel les comparateurs effectuent des opérations de comparaison en parallèle.

8. Procédé selon la revendication 5, 6 ou 7, dans lequel les signaux de sortie des comparateurs sont combinés par une grille OU (9), dans lequel le signal de sortie de la grille OU indique si l'accès à la portion de mémoire sélectionnée que recherche un processeur peut être autorisé ou pas.

9. Procédé selon l'une quelconque des revendications précédentes, dans lequel les types d'accès autorisés comprennent l'accès d'exécution et l'accès d'écriture.

10. Système de traitement de données apte à effectuer le procédé selon l'une quelconque des revendications précédentes.

11. Produit de programme informatique comprenant un code qui, lorsqu'il est exécuté par un système de traitement de données, effectue le procédé selon l'une quelconque des revendications 1 à 9.
